# EUROPÄISCHE PATENTANMELDUNG

(11) **EP 1 702 798 A1**
(43) Veröffentlichungstag der Anmeldung: **20.09.2006**
(21) Anmeldenummer: 05028693.9
(22) Anmeldetag: 30.12.2005
(51) Int. Cl.: B60Q 1/30, B60Q 11/00

(54) **Verfahren und Steuerung zum Ansteuern parallel betreibbarer Leuchten**

(30) Priorität: 18.03.2005 DE 102005012460
(71) Anmelder: ERICH JAEGER GmbH + Co. KG, 61145 Friedberg (DE)
(72) Erfinder: Ruebsam, Carsten, 36088 Hünfeld (DE); Wiese, Wolfgang, 61389 Schmitten (DE); Borbe, Thorsten, 61231 Bad Nauheim (DE); Gloe, Karl-Heinz, 61231 Bad Nauheim (DE)
(74) Vertreter: KEIL & SCHAAFHAUSEN Patentanwälte

(57) **Zusammenfassung**

Es werden ein Verfahren und ein System zum Ansteuern parallel betreibbarer Leuchten (2, 3) insbesondere in Kraftfahrzeugen beschrieben, wobei mindestens eine erste Leuchte (2) über einen ersten Leuchtenkanal (4) und mindestens eine zweite Leuchte (3) in Abhängigkeit eines ersten Leuchtensignals in dem ersten Leuchtenkanal (4) über einen zweiten Leuchtenkanal (6) angesteuert werden. Damit die Ansteuerung auch bei Ausfall der ersten Leuchte (2) zuverlässig arbeitet, ist vorgesehen, dass bei einem Ausfall der ersten Leuchte (2) der erste Leuchtenkanal (4) auf den zweiten Leuchtenkanal (6) geschaltet wird oder der ersten Leuchte (2) in dem ersten Leuchtenkanal (4) ein Verbraucher (22) parallel geschaltet wird.

## Beschreibung

Die Erfindung betrifft ein Verfahren und eine Steuerung zum Ansteuern parallel betreibbarer Leuchten, insbesondere in Kraftfahrzeugen, wobei mindestens eine erste Leuchte über einen ersten Leuchtenkanal und mindestens eine zweite Leuchte in Abhängigkeit eines ersten Leuchtensignals in dem ersten Leuchtenkanal über einen zweiten Leuchtenkanal angesteuert wird.

Derartige Verfahren und Steuerungen sind bspw. aus der Automobilindustrie bekannt, in der sie zur Steuerung und Überwachung der Blinkerleuchten an einem Zugkraftfahrzeug und einem Anhänger eingesetzt werden. Sobald eine der angesteuerten Blinkerleuchten ausfällt, wird dies durch eine höhere Blinkfrequenz einer Anzeige im Fahrzeugcockpit angezeigt. Die Aufgabe der Ansteuerung und Überwachung der Blinkerleuchten übernimmt ein typischerweise im Fahrzeug montiertes Anhängersteuergerät, das in die Leitungen der hinteren Fahrzeugblinkerleuchten eingeschleift wird. Das Anhängersteuergerät verfügt damit über die erforderlichen Informationen des zugfahrzeugseitigen Blinkersignals zur Ansteuerung der Anhängerblinkerleuchte. Die für die Ansteuerung der Anhängerblinkerleuchte benötigte Energie erhält das Ansteuergerät durch Anschluss an eine fahrzeugseitige Energiequelle, die sogenannte Klemme 30 mit einer positiven Dauerspannung.

Ferner überwacht ein typisches Anhängersteuergerät die Funktion der Anhängerblinkerleuchte und unterbricht im Fehlerfall die Leitung des ersten Leuchtenkanals zwischen einem fahrzeugseitigen Bordnetzsteuergerät als übergeordneter Steuerung und der als erste Leuchte dienenden fahrzeugseitigen Blinkerleuchte. Dem Bordnetzsteuergerät wird auf diese Weise eine defekte fahrzeugseitige (erste) Blinkerleuchte simuliert, worauf der Fehler durch eine Blinkfrequenzerhöhung oder andere Fehleranzeigen im Fahrzeugcockpit angezeigt wird. Die Funktion der fahrzeugseitigen (ersten) Blinkerleuchte wird in diesem Fall jedoch durch das Anhängersteuergerät gewährleistet, das die fahrzeugseitige (erste) Blinkerleuchte nun mit der Spannung aus der separaten Energiequelle des Anhängersteuergerätes weiter versorgt. Somit kann im Falle eines Fehlers der zweiten Leuchte durch eine Lastmanipulation im Zugfahrzeug die Störung angezeigt werden, ohne dass die Funktion der fahrzeugseitigen (ersten) Blinkerleuchte gestört wird.

Um einen unnötigen Stromverbrauch zu vermeiden, wird in neuen Bordnetzsteuergeräten der fahrzeugseitige (erste) Leuchtenkanal nach der Erkennung einer defekten Leuchte jedoch deaktiviert. Daher ist nach Ausfall der fahrzeugseitigen Blinkerleuchte das Blinkersignal für ein Anhängersteuergerät nicht mehr abgreifbar und die Anhängersignalisierung ebenfalls nicht mehr möglich. Ferner kann ein Defekt der zweiten Blinkerleuchte am Anhänger dem Fahrzeugführer nicht mehr signalisiert werden, ohne dass der fahrzeugseitige Blinker (erste Leuchte) ebenfalls ausfällt. Ein derartiger zusätzlicher Ausfall der Beleuchtung am Zugfahrzeug durch einen Defekt am Anhänger ist jedoch nach StVzo. nicht erlaubt.

Aufgabe der vorliegenden Erfindung ist es daher, eine Möglichkeit zum Ansteuern parallel betreibbarer Leuchten vorzusehen, bei der die zweite Leuchte, welche in Abhängigkeit eines ersten Leuchtensignals einer ersten Leuchte angesteuert wird, auch bei Ausfall der ersten Leuchte zuverlässig arbeitet.

Diese Aufgabe wird mit den Merkmalen der Ansprüche 1 und 10 gelöst. Bei dem erfindungsgemäßen Verfahren ist insbesondere vorgesehen, dass bei einem Ausfall der ersten Leuchte der erste Leuchtenkanal auf den zweiten Leuchtenkanal geschaltet wird oder der ersten Leuchte in dem ersten Leuchtenkanal ein Verbraucher parallel geschaltet wird. Dadurch wird bei Ausfall der ersten Leuchte eine ordnungsgemäße Funktion dieser ersten Leuchte simuliert, so dass das Erzeugen des ersten Leuchtensignals durch eine übergeordnete Steuerung nicht abgebrochen wird und auf Grundlage dieses Signals die zweite Leuchte in dem zweiten Leuchtenkanal angesteuert werden kann.

Dies kann erfindungsgemäß entweder durch Umleiten des ersten Leuchtenkanals auf den zweiten Leuchtenkanal erfolgen, so dass im Falle eines Defektes der ersten Leuchte das erste Steuersignal unmittelbar zur Ansteuerung der zweiten Leuchte verwendet wird. Alternativ kann der ersten defekten Leuchte in dem ersten Leuchtenkanal bspw. in einem Steuergerät der Steuerung ein der Leuchte in etwa entsprechender Verbraucher, bspw. ein elektrischer Widerstand, parallel geschaltet werden, so dass dieser elektrische Verbraucher eine ordnungsgemäße Funktion der ersten Leuchte simuliert. Das erste Leuchtesignal kann dann wie bei einer ordnungsgemäßen Funktion beider Leuchten zur Erzeugung des zweiten Leuchtensignals in dem zweiten Leuchtenkanal verwendet werden. Im Bereich der Kraftfahrzeugtechnik eignet sich dieses Verfahren besonders für die Steuerung der Beleuchtungsanlage eines Anhängers an einem Personenkraftwagen, wobei durch die Steuerung Blinkerleuchten, Schlusslicht, Bremslicht, Rückscheinwerfer und Nebenschlussleuchte von Zugfahrzeug und Anhänger angesteuert und/oder überwacht werden können.

Erfindungsgemäß kann das erste Leuchtensignal, aufgrund dessen das zweite Leuchtensignal zur Ansteuerung der zweiten Leuchte erzeugt wird, von einer übergeordneten Steuerung erzeugt werden, auf die erfindungsgemäß kein Einfluss ausgeübt werden kann. Insbesondere soll von einer Steuerung zur Durchführung des Verfahrens kein Fehlersignal über den Ausfall der ersten und/oder der zweiten Leuchte an die übergeordnete Steuerung gesendet werden. Derartige Anforderungen bestehen regelmäßig bei einer sicherheitsrelevanten Ansteuerung von Leuchten insbesondere im Kraftfahrzeugbereich. Dort werden von Automobilherstellern, welche die ordnungsgemäße Funktion ihres Leuchtensystems im Rahmen der gesetzlichen Bestimmungen garantieren müssen, keine Eingriffe von außen in deren übergeordnete Steuerung zugelassen. Mit der erfindungsgemäßen Möglichkeit zum Ansteuern parallel betreibbarer Leuchten ist ein derartiger Eingriff nicht notwendig.

Erfindungsgemäß können der erste Leuchtenkanal und der zweite Leuchtenkanal insbesondere bei normaler Funktion der Leuchten durch verschiedene Energiequellen versorgt werden. Hierdurch wird eine größtmögliche Unabhängigkeit der Ansteuerung der beiden Leuchten erreicht. Dabei kann das Verfahren jedoch so ausgebildet sein, dass der zweite Leuchtenkanal der Energiequelle für den ersten Leuchtenkanal zuschaltbar ist, insbesondere wenn bei einem Ausfall der ersten Leuchte der erste Leuchtenkanal auf den zweiten Leuchtenkanal geschaltet wird. In diesem Fall betreibt die Energiequelle des ersten Leuchtenkanals also unmittelbar die zweite Leuchte.

Da es wichtig ist, nicht nur den Betrieb der zweiten Leuchte bei Ausfall der ersten Leuchte aufrecht zu erhalten, sondern den Ausfall einer Leuchte auch anzuzeigen, ist erfindungsgemäß vorgesehen, dass vorzugsweise der erste und der zweite Leuchtkanal überwacht werden und bei Ausfall einer Leuchte ein von dem Störungssignal einer übergeordneten Steuerung verschiedenes Fehlersignal erzeugt wird. Auf diese Weise kann, ohne dass in die übergeordnete Steuerung eingegriffen wird, der Defekt einer Leuchte zuverlässig angezeigt werden.

Dieses Fehlersignal kann erfindungsgemäß optisch und/oder akustisch ausgegeben werden, bspw. auch in Form einer Sprachausgabe. Dazu wird erfindungsgemäß ein von einem Signalgeber für ein Störsignal der übergeordneten Steuerung verschiedener Signalgeber verwendet.

Der Signalgeber kann eigene, separate akustische und/oder optische Signalmittel, wie bspw. ein Display, einen Lautsprecher und/oder einen Summer ansteuern, die lediglich zur Anzeige der Fehlersignale der erfindungsgemäßen Steuerung vorgesehen sind. Allerdings ist gemäß einer bevorzugten Ausführungsform der Erfindung vorgesehen, dass die Signalgeber für das Fehlersignal und die Signalgeber für das Störsignal der übergeordneten Steuerung auf dieselben Signalmittel zurückgreifen. Dies hat insbesondere in der Automobiltechnik den Vorteil, dass keine zusätzlichen Signalmittel im Zugfahrzeug eingebaut werden müssen, welche die Kosten des Systems weiter erhöhen. Außerdem wird die Bedienung vereinfacht, weil Fehlermeldungen durch die selben Signalmittel ausgegeben werden wie bspw. fahrzeugeigene Fehlermeldungen, an die der Fahrzeugführer gewöhnt ist und auf die er gewöhnlich achtet. Insbesondere können vorhandene Lautsprecher zur Ausgabe akustischer Fehlersignale dienen.

Gemäß einer bevorzugten Verwendung der vorliegenden Erfindung ist die erste Leuchte die Blinkerleuchte eines Zugfahrzeugs, insbesondere eines Personenkraftwagens, und die zweite Leuchte die Blinkerleuchte eines Anhängers. Natürlich ist die erfindungsgemäße Anwendung nicht auf die Ansteuerung eines rechten und linken Blinkers sowie weiterer, ggf. rechter und linker Beleuchtungseinrichtungen eines Zugfahrzeugs eines Anhängers im Kraftfahrzeugbereich beschränkt, sondern kann vorteilhaft für alle Anwendungen eingesetzt werden, in denen eine zweite Leuchte in Abhängigkeit von einer ersten Leuchte zuverlässig angesteuert werden muss.

Dementsprechend bezieht sich die Erfindung auch auf eine Steuerung zum Ansteuern parallel betreibbarer Leuchten, insbesondere zur Durchführung des zuvor beschriebenen Verfahrens, mit einer elektronischen Schaltung, welche eine Steuerschaltung, insbesondere einen Mikrokontroller, ein CPLD (Complex Programmable Logic Device) und/oder ein FPGA (Field Programmable Gate Array), einen ersten Anschluss an den ersten Leuchtenkanal zum Empfangen und/oder Senden eines ersten Leuchtensignals und einen zweiten Anschluss an den zweiten Leuchtenkanal zum Empfangen und/oder Senden eines zweiten Leuchtenkanals aufweist. Damit hat die Steuerschaltung vollen Zugriff auf ein erstes Leuchtensignal in dem ersten Leuchtenkanal. Abhängig von dem Vorhandensein des ersten Leuchtensignals kann sie dann ein zweites Leuchtensignal erzeugen und über einen zweiten Leuchtenkanal an eine zweite Leuchte senden. Ferner besteht die Möglichkeit zum Überwachen der Funktion der parallel betriebenen Leuchten. Erfindungsgemäß schaltet die Steuerschaltung bei einem über den ersten Anschluss detektierten Defekt der ersten Leuchten den ersten Leuchtenkanal auf den zweiten Leuchtenkanal um. Alternativ wird der ersten Leuchte in dem ersten Leuchtenkanal einen Verbraucher parallel geschaltet. So wird bei Ausfall der ersten Leuchte deren ordnungsgemäße Funktion simuliert. Dadurch erhält eine übergeordnete Steuerung zur Erzeugung des ersten Leuchtensignals auch im Falle eines Defekts der ersten Leuchte die Information, dass die erste Leuchte funktioniert, und deaktiviert daher nicht den ersten Leuchtkanal. Dies ermöglicht auch bei Ausfall der ersten Leuchte die zweite Leuchte parallel zu dem weiter erzeugten ersten Leuchtensignal zu betreiben. -

Der zugeschaltete Verbraucher kann insbesondere ein dem elektrischen Widerstand der Leuchte entsprechender elektrischer Widerstand sein, welcher in der elektronischen Schaltung der Steuerung der ersten Leuchte in dem ersten Leuchtenkanal erfindungsgemäß parallel geschaltet wird.

Um unerwünschte Rückwirkungen in dem ersten Leuchtenkanal zu vermeiden, kann der erste Anschluss der Steuerung eine Unterbrecherschaltung für den ersten Leuchtenkanal aufweisen, so dass der erste Leuchtenkanal zwangsläufig durch die Steuerung durchgeschleift wird. Dadurch erhält die erfindungsgemäße Steuerung besonders zuverlässig Steuermöglichkeiten sowohl für die erste als auch für die zweite Leuchte. Die Unterbrecherschaltung kann bspw. durch eine von dem ersten Leuchtenkanal zu der elektronischen Schaltung bzw. Steuerschaltung hinführende Leitung und eine von der elektronischen Schaltung bzw. Steuerschaltung zu dem ersten Leuchtenkanal rückführende Leitung umgesetzt werden, zwischen denen der Anschluss den ersten Leuchtenkanal unterbricht.

Zur Überwachung der Funktion der ersten und/oder zweiten Leuchte kann erfindungsgemäß eine Überwachungsschaltung innerhalb der Steuerung vorgesehen sein, insbesondere eine Strommessschaltung, welche eine sogenannte Open-Load-Detektion vornimmt. Dadurch lässt sich die Funktion der ersten und zweiten Leuchten anhand des Stromflusses durch die erste und zweite Leuchte in laufendem Betrieb zeitnah und unmittelbar erfassen.

Um das Überwachungsergebnis anzeigen zu können, ist es vorteilhaft, wenn die Steuerung einen Signalgeber zur Ausgabe eines optischen und/oder akustischen Fehlersignals sowie ggf. ein optisches und/oder akustisches Signalmittel, insbesondere ein Display, einen Lautsprecher und/oder einen Summer, aufweist. Der Signalgeber ist über einen Anschluss mit der Steuerung verbunden und kann an einer geeigneten Stelle platziert werden.

Die Überwachungsfunktion lässt sich besonders vorteilhaft erreichen, wenn die Steuerung einen Schalter zum Aufschalten eines Signals, insbesondere eines Fehlersignals, auf vorhandene Signalmittel aufweist. Dadurch können die Signalmittel weiter verwendet werden, welche der Benutzer für die Ausgabe von Fehlermeldungen bspw. der übergeordneten Steuerung ohnehin kennt, ohne dass zusätzliche Signalmittel eingebaut werden müssen.

Der Schalter zum Aufschalten dieses Signals kann bspw. ein Doppelwechslerrelais oder eine andere geeignete elektronische Schaltung sein. Der Schalter trennt vorhandene Signalmittel von der vorhandenen Ansteuerung für eine vorgebbare Dauer, die insbesondere der Ausgabedauer des Signals bzw. Fehlersignals entspricht. Die Trennung kann als vollständige Deaktivierung der vorhandenen Ansteuerung oder entsprechende Beschränkung der Ansteuerung ausführt werden. Bei einer akustischen Anzeige kann die vorhandene Anzeigensteuerung bspw. mit einem geringeren Lautstärkepegel im Hintergrund hinter dem akustisch hervortretenden Fehlersignal bestehen bleiben.

Die erfindungsgemäße Steuerung eignet sich besonders für eine Blinkerleuchte eines Zugfahrzeugs als erste Leuchte und eine Blinkerleuchte eines Anhängers als zweite Leuchte ist. Die Verwendung der Steuerung ist erfindungsgemäß jedoch nicht auf diesen besonders bevorzugten Anwendungsfall beschränkt, sondern kann bspw. auch zur Leuchtendefektsignalisierung und/oder Steuerung für ein linkes oder rechtes Schlusslicht oder Bremslicht, einen Rückfahrscheinwerfer und/oder eine Nebelschlussleuchte von Anhänger und Zugfahrzeug verwendet sowie allgemein bei der Ansteuerung parallel betreibbarer Leuchten auch außerhalb des Kraftfahrzeugsektors eingesetzt werden.

Weitere Merkmale, Vorteile und Anwendungsmöglichkeiten der vorliegenden Erfindung ergeben sich auch aus der nachfolgenden Beschreibung eines Anwendungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von der Zusammenfassung in den Ansprüchen oder deren Rückbezügen.

Es zeigen:
- Fig.1: einen schematischen Schaltplan einer erfindungsgemäßen Steuerung entsprechend einer ersten Ausführungsform und
- Fig. 2: einen schematischen Schaltplan einer erfindungsgemäßen Steuerung gemäß einer zweiten Ausführungsform.

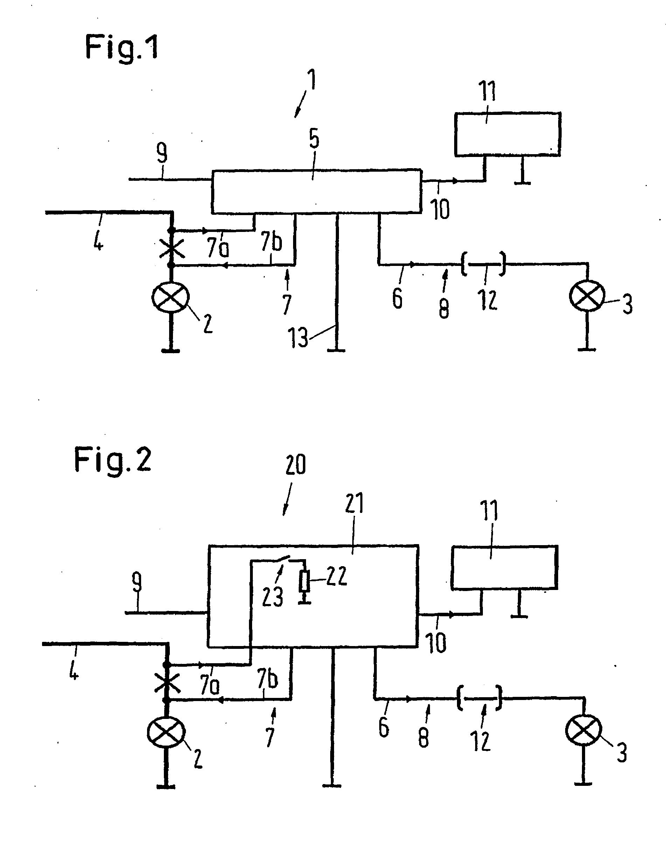

Die in Fig. 1 dargestellte Steuerung 1 zum Ansteuern parallel betreibbarer Leuchten 2, 3 zeigt ein Anwendungsbeispiel, bei dem die erste Leuchte 2 eine Blinkerleuchte eines Zugfahrzeugs und die zweite Leuchte 3 die entsprechende Blinkerleuchte eines Anhängers ist. Bei dem Steuergerät 1 handelt es sich jedoch um ein Anhängersteuergerät insbesondere für Personenkraftwagen, mit dem die gesamte Beleuchtungsanlage eines Anhängers angesteuert werden kann und dessen Funktion nachfolgend der Einfachheit halber anhand von Blinkerleuchten beschrieben wird.

In dem Zugfahrzeug ist ein erster Leuchtenkanal 4 vorgesehen, der von einer nicht dargestellten übergeordneten Steuerung des Kraftfahrzeugs angesteuert wird. Dazu ist der Leuchtenkanal 4 mit einer ersten Energiequelle verbunden, welche ein erstes Leuchtensignal aussendet, wenn die Blinkerleuchte 2 des Zugfahrzeugs in dem ersten Leuchtenkanal 4 aufleuchten soll. Die übergeordnete Steuerung des Zugfahrzeugs funktioniert unabhängig davon, ob ein Anhänger an das Zugfahrzeug angeschlossen ist oder nicht.

Wenn ein Anhänger an das Zugfahrzeug angeschlossen ist, müssen die an dem Zugfahrzeug erzeugten Lichtsignale, insbesondere auch das Blinkerlicht, auf den Anhänger übertragen werden. Dazu ist eine elektronische Schaltung 5 mit einer nicht detailliert gezeigten Steuerschaltung vorgesehen, welche das erste Leuchtensignal in dem ersten Leuchtenkanal 4 abgreift und in Abhängigkeit von dem ersten Leuchtensignal die zweite Leuchte 3 in einem zweiten Leuchtenkanal 6 ansteuert. Dementsprechend weist die elektronische Schaltung 5 einen ersten Anschluss 7 an den ersten Leuchtenkanal 4 zum Empfangen und/oder Senden eines ersten Leuchtensignals und einen zweiten Anschluss 8 an den zweiten Leuchtenkanal 6 zum Empfangen und/oder Senden des zweiten Leuchtensignals an die bzw. von der zweiten Leuchte 3 auf.

Der erste Anschluss 7 ist dabei derart ausgebildet, dass der erste Leuchtenkanal 4 zwischen einer von dem ersten Leuchtenkanal 4 zu der elektronischen Schaltung 5 hinführenden Leitung 7a und einer von der elektronischen Schaltung 5 zu dem ersten Leuchtenkanal 4 rückführenden Leitung 7b unterbrochen werden kann.

Die elektronische Schaltung 5 weist ferner einen Energieanschluss 9 an eine von der Energiequelle des ersten Leuchtenkanals 4 vorzugsweise verschiedene Energiequelle auf, welche bspw. ein Dauerplussignal liefert. Dies kann die sogenannte Klemme 30 der fahrzeugseitigen Energieversorgung sein. Ferner ist die elektronische Schaltung 5 über einen Signalanschluss 10 an einen Signalgeber 11 angeschlossen, welcher die Ausgabe von Fehlersignalen, bspw. bei einem Defekt der ersten Leuchte 2 und/oder der zweiten Leuchte 3, über geeignete Signalmittel veranlasst.

Nachfolgend wird die Funktionsweise der elektronischen Schaltung 5 bzw. der Steuerschaltung im Normalbetrieb beschrieben. Über die hinführende Leitung 7a des ersten Anschlusses 7 wird ein erstes Leuchtensignal in dem ersten Leuchtenkanal 4 an die elektronische Schaltung 5 zur Auswertung insbesondere mittels eines Mikrokontrollers oder eines geeigneten anderen vorzugsweise programmierbaren Bausteins, bspw. einem CPLD (Complex Programmable Logic Device) oder einem FDGA (Field Programmable Gate Array), geleitet.

Wenn ein erstes Leuchtensignal zur Ansteuerung der ersten Leuchte 2 in dem ersten Leuchtenkanal 4 erkannt wird, welches von einer übergeordneten Steuerung des Zugfahrzeugs zum Setzen eines Blinkersignals ausgegeben wurde, schaltet die elektronische Schaltung 5 den zweiten Leuchtenkanal 6 mit der zweiten Leuchte 3, damit auch das Blinkerlicht des Anhängers betätigt wird. Zur Erzeugung des dafür notwendigen zweiten Leuchtensignals greift die elektronische Schaltung 5 auf die über den separaten Energieanschluss 9 angeschlossene Energiequelle zurück. Das zweite Leuchtensignal zur Ansteuerung der zweiten Leuchte 2 wird dann über den zweiten Leuchtenkanal 6 und den Anhängerstecker 12 zu der Blinkerleuchte 3 des Anhängers übertragen, damit dieser zusammen mit der Blinkerleuchte 2 des Zugfahrzeugs aufleuchtet.

Das erste Leuchtensignal kann dabei über den ersten Leuchtenkanal 4 zu der ersten Leuchte 2 übertragen werden, als wäre die elektronische Schaltung 5 nicht vorhanden. Wenn, wie in Fig. 1 dargestellt, der erste Leuchtenkanal 4 durch den ersten Anschluss 7 unterbrochen wird, kann die elektronische Schaltung 5 den ersten Leuchtenkanal 4 über die hinführende Leitung 7a und die rückführende Leitung 7b durchschalten, so dass die erste Leuchte 2 durch die elektronische Schaltung 5 hindurch mit dem von der übergeordneten Steuerung erzeugten ersten Leuchtensignal betätigt wird. Alternativ kann die elektronische Schaltung 5 das über die hinführende Leitung 7a abgegriffene erste Leuchtensignal auswerten und zusammen mit dem zweiten Leuchtensignal zum Betätigen der zweiten Leuchte 3 ein eigenes erstes Leuchtensignal zur Betätigung der ersten Leuchte 2 erzeugen und über die rückführende Leitung 7b wieder in den ersten Leuchtenkanal 4 einspeisen. Alle diese Varianten führen dazu, dass die Leuchte 2 betätigt wird, wenn das erste Leuchtensignal in dem ersten Leuchtenkanal 4 auftritt.

In modernen Kraftfahrzeugen sind die übergeordneten Steuerungen häufig derart ausgebildet, dass die in einem Leuchtenkanal 4 betriebenen Leuchten 2 auf Funktionsfähigkeit überwacht werden und im Falle einer Fehlfunktion, bspw. einem Defekt der Leuchte 2, der Leuchtenkanal 4 abgeschaltet wird, so dass im Falle einer Betätigung des Blinkers überhaupt kein Leuchtensignal mehr erzeugt wird. Ein derartiges Abschalten des ersten Leuchtenkanals 4 hätte jedoch zur Folge, dass das erste Leuchtensignal von der elektronischen Schaltung 5 nicht mehr abgegriffen und die zweite Leuchte 3 nicht mehr betätigt werden kann.

Um dies zu verhindern, wird der elektronischen Schaltung 5 ein Ausfall der ersten Leuchte 2 signalisiert. Dies kann bspw. durch eine in der elektronischen Schaltung 5 realisierte Überwachungsschaltung in Form einer Open-Load-Detektion erfolgen. Die elektronische Schaltung 5 schaltet dann den ersten Leuchtenkanal 4 über die hinführende Leitung 7a und einen in der elektronischen Schaltung 5 geeignet realisierten, insbesondere elektronischen Schalter direkt auf den zweiten Leuchtenkanal 6, in dem die zweite Leuchte 3 angeordnet ist. Auf diese Weise wird die zweite Leuchte 3 direkt durch das von der übergeordneten Steuerung des Zugfahrzeugs ausgesendete erste Leuchtensignal in dem ersten Leuchtenkanal 4 angesteuert, welches auf den zweiten Leuchtenkanal 6 umgeleitet wurde. Dadurch wird der übergeordneten Steuerung des Kraftfahrzeugs durch das Schalten der zweiten Leuchte 3 die ordnungsgemäße Funktion der ersten Leuchte 2 simuliert, so dass der erste Leuchtenkanal 4 nicht abgeschaltet wird.

Eine ähnliche Funktionsweise wird durch die zweite Steuerung 20 erreicht, die nachfolgend in Bezug auf Fig. 2 erläutert wird. Diese weist eine von der elektronischen Schaltung 5 der vorbeschriebenen Steuerung 1 verschiedene elektronische Schaltung 21 mit einer entsprechenden Steuerschaltung auf. Die weiteren Funktionselemente der Steuerung 20 gemäß Fig. 2 entsprechen denen der vorbeschriebenen Steuerung 1. Diese werden daher mit den selben Bezugszeichen versehen und im Folgenden nicht weiter erläutert.

Während der normalen Funktion der Leuchten 2, 3 funktioniert die elektronische Schaltung 21 auch in vergleichbarer Weise zu der vorbeschriebenen elektronischen Schaltung 5. Diese greift das erste Leuchtensignal in dem ersten Leuchtenkanal 4 über die hinführende Leitung 7a ab und erzeugt bei Erkennen eines ersten Leuchtensignals in dem zweiten Leuchtenkanal 6 ein zweites Leuchtensignal zur Ansteuerung der zweiten Leuchte 3. Sobald die elektronische Schaltung 21 den Ausfall der fahrzeugseitigen, ersten Leuchte 2 bspw. mittels einer Überwachungsschaltung erkennt oder mitgeteilt bekommt, schaltet sie der ersten Leuchte 2 einen als Widerstand 22 ausgebildeten Verbraucher parallel, welcher in die elektronische Schaltung 21 integriert ist und für die übergeordnete Steuerung in dem Zugfahrzeug die ordnungsgemäße Funktion der defekten Leuchte 2 simuliert. Dazu ist ein Schalter 23 vorgesehen, der bei Ausfall der ersten Leuchte 2 betätigt wird. Das zweite Leuchtensignal in dem zweiten Leuchtenkanal 6 wird in diesem Fall wie bei einem ordnungsgemäßen Normalbetrieb erzeugt.

Durch die in den elektronischen Schaltungen 5, 21 vorgesehene Simulation der ordnungsgemäßen Funktion der ersten Leuchte 2 wird das Abschalten des ersten Leuchtkanals 4 verhindert, so dass das erste Leuchtensignal für den Abgriff einer parallel zu betreibenden zweiten Leuchte 3, insbesondere der blinkerseitigen Anhängerleuchte, nach wie vor zur Verfügung steht.

Damit wird jedoch auch der Ausfall der fahrzeugseitigen ersten Leuchte 2 nicht signalisiert, da die hierfür zuständige übergeordnete Steuerung des Zugfahrzeugs den Defekt der ersten Leuchte 2 nicht mehr erkennt. Aus diesem Grund wird der mittels einer Überwachungsschaltung der elektronischen Schaltung 5, 21 festgestellte Ausfall der ersten Leuchte 2 von der elektronischen Schaltung 5, 21 als Fehlersignal dem Signalgeber 11 gemeldet. Die Überwachungsschaltung, welche gleichzeitig auch die Funktion der zweiten Leuchte 3 sowie ggf. weiterer, an die elektronische Schaltung 5, 21 angeschlossener Leuchten überwachen kann, funktioniert bspw. mittels einer Open-Load-Detektion, welche eine veränderte Leistungsaufnahme der Leuchten 2, 3 feststellt und daraus einen Defekt der Leuchten 2, 3 ableitet. Um den Defekt einer Leuchte 2,3 anzuzeigen, gibt der Signalgeber 11 über geeignete optische und/oder akustische Signalmittel ein entsprechendes Fehlersignal aus, welches insbesondere von dem Störsignal einer übergeordneten Steuerung verschieden ist.

Der Signalgeber 11 kann für die Ausgabe des Fehlersignals die selben Signalmittel wie ein Signalgeber der übergeordneten Steuerung verwenden. Dies können akustische und/oder optische Signalmittel, wie ein Display, ein Lautsprecher und/oder ein Summer sein. Beispielsweise kann der Signalgeber 11 für ein Fehlersignal auch eine Sprachausgabe erzeugen.

Wenn das Fehlersignal über ein in dem Zugfahrzeug ohnehin vorhandenes Signalmittel, insbesondere ein Lautsprecher, ausgegeben wird, weist die Steuerung 1, 20 bzw. der Signalgeber 11 einen Schalter zum Aufschalten eines Signals auf vorhandene Signalmittel auf, bspw. ein Doppelwechslerrelais oder eine elektronische Schaltung, um die Signalmittel parallel zu einer anderen Verwendung anzusteuern. Dazu kann die andere Verwendung des Signalmittels, bspw. eines Lautsprechers und/oder eines Displays, während der Ausgabe des von dem Signalgeber 11 erzeugten Fehlersignals deaktiviert oder eingeschränkt werden.

Mit der erfindungsgemäßen Steuerung 1, 20 wird daher ein zuverlässiges Betreiben parallel anzusteuernder Leuchten 2, 3 erreicht, die auch bei Ausfall einer der Leuchten 2, 3 derart arbeitet, dass zumindest die andere Leuchte 3, 2 angesteuert wird. Gleichzeitig wird durch den Signalgeber 11 ein Fehlersignal ausgegeben, welches den Defekt der Leuchten 2, 3 anzeigt.

### Bezugszeichenliste:

- 1: Steuerung zum Ansteuern parallel betreibbarer Leuchten
- 2: erste Leuchte, Blinkerleuchte des Zugfahrzeugs
- 3: zweite Leuchte, Blinkerleuchte des Anhängers
- 4: erster Leuchtenkanal
- 5: elektronische Schaltung
- 6: zweiter Leuchtenkanal
- 7: erster Anschluss
- 7a: hinführende Leitung
- 7b: rückführende Leitung
- 8: zweiter Anschluss
- 9: Energieanschluss
- 10: Signalanschluss
- 11: Signalgeber
- 12: Anhängerstecker
- 13: Erde

- 20: Steuerung zum Ansteuern parallel betreibbarer Leuchten
- 21: elektronische Schaltung
- 22: Widerstand
- 23: Schalter

## Patentansprüche

1. Verfahren zum Ansteuern parallel betreibbarer Leuchten (2, 3), insbesondere in Kraftfahrzeugen, bei dem mindestens eine erste Leuchte (2) über einen ersten Leuchtenkanal (4) und mindestens eine zweite Leuchte (3) in Abhängigkeit eines ersten Leuchtensignals in dem ersten Leuchtenkanal (4) über einen zweiten Leuchtenkanal (6) angesteuert wird, **dadurch gekennzeichnet, dass** bei einem Ausfall der ersten Leuchte (2) der erste Leuchtenkanal (4) auf den zweiten Leuchtenkanal (6) geschaltet wird oder der ersten Leuchte (2) in dem ersten Leuchtenkanal (4) ein Verbraucher (22) parallel geschaltet wird.

2. Verfahren nach Anspruch 1, **dadurch gekennzeichnet, dass** das erste Leuchtensignal von einer übergeordneten Steuerung erzeugt wird.

3. Verfahren nach Anspruch 1 oder 2, **dadurch gekennzeichnet, dass** der erste Leuchtenkanal (4) und der zweite Leuchtenkanal (6) durch verschiedene Energiequellen versorgt werden.

4. Verfahren nach Anspruch 3, **dadurch gekennzeichnet, dass** der zweite Leuchtenkanal (6) der Energiequelle für den ersten Leuchtenkanal (4) zuschaltbar ist.

5. Verfahren nach einem der vorhergehenden Ansprüche, **dadurch gekennzeichnet, dass** der erste und/oder der zweite Leuchtenkanal (4, 6) überwacht werden und bei Ausfall einer Leuchte (2, 3) ein von dem Störungssignal einer übergeordneten Steuerung verschiedenes Fehlersignal erzeugt wird.

6. Verfahren nach Anspruch 5, **dadurch gekennzeichnet, dass** das Fehlersignal optisch und/oder akustisch ausgegeben wird.

7. Verfahren nach Anspruch 6, **dadurch gekennzeichnet, dass** zur Ausgabe des Fehlersignals ein von einem Signalgeber für ein Störsignal einer übergeordneten Steuerung verschiedener Signalgeber (11) verwendet wird.

8. Verfahren nach Anspruch 7, **dadurch gekennzeichnet, dass** der Signalgeber (11) für das Fehlersignal und der Signalgeber für das Störsignal gleiche Signalmittel, insbesondere akustische und/oder optische Signalmittel wie Display, Lautsprecher und/oder Summer, verwenden.

9. Verfahren nach einem der vorhergehenden Ansprüche, **dadurch gekennzeichnet, dass** die erste Leuchte (2) eine Blinkerleuchte eines Zugfahrzeugs und die zweite Leuchte (3) eine Blinkerleuchte eines Anhängers ist.

10. Steuerung zum Ansteuern parallel betreibbarer Leuchten (2 ,3), insbesondere zur Durchführung des Verfahrens nach einem der Ansprüche 1 bis 9, mit einer elektronischen Schaltung (5), welche eine Steuerschaltung, insbesondere einen Mikrokontroller, CPLD und/oder FPGA, einen ersten Anschluss (7) an einen ersten Leuchtenkanal (4) zum Empfangen und/oder Senden eines ersten Leuchtensignals, einen zweiten Anschluss (8) an einen zweiten Leutchenkanal (6) zum Empfangen und/oder Senden eines zweiten Leuchtensignals aufweist, **dadurch gekennzeichnet, dass** die Steuerschaltung bei einem über den ersten Anschluss (7) detektierten Defekt einer ersten Leuchte (2) den ersten Leuchtenkanal (4) auf den zweiten Leuchtenkanal (6) schaltet oder der ersten Leuchte (2) in dem ersten Leuchtenkanal (4) einen Verbraucher (22) parallel schaltet.

11. Steuerung nach Anspruch 10, **dadurch gekennzeichnet, dass** der Verbraucher (22) ein dem elektrischen Widerstand der Leuchte entsprechender Widerstand ist.

12. Steuerung nach Anspruch 10 der 11, **dadurch gekennzeichnet, dass** der erste Anschluss (7) eine Unterbrecherschaltung (7a, 7b) für den ersten Leuchtenkanal (4) aufweist.

13. Steuerung nach einem der Ansprüche 10 bis 12, **dadurch gekennzeichnet, dass** eine Überwachungsschaltung zur Überwachung der Funktion der ersten und/oder zweiten Leuchte (2, 3) vorgesehen ist, insbesondere eine aktive Strommessschaltung.

14. Steuerung nach einem der Ansprüche 10 bis 13, **dadurch gekennzeichnet, dass** die Steuerung (1) einen Signalgeber (11) zur Ausgabe eines optischen und/oder akustischen Fehlersignals sowie ggf. ein optisches und/oder akustisches Signalmittel, insbesondere ein Display, Lautsprecher und/oder Summer, aufweist

15. Steuerung nach einem der Ansprüche 10 bis 14, **dadurch gekennzeichnet, dass** die Steuerung (1) einen Schalter zum Aufschalten eines Signals, insbesondere eines Fehlersignals, auf vorhandene Signalmittel aufweist.

16. Steuerung nach Anspruch 15, **dadurch gekennzeichnet, dass** der Schalter, insbesondere ein Doppelwechslerrelais, das vorhandene Signalmittel von der vorhandenen Ansteuerung für eine vorgebbare Dauer, insbesondere die Ausgabedauer des Signals, trennt.

17. Steuerung nach einem der Ansprüche 10 bis 16, **dadurch gekennzeichnet, dass** die erste Leuchte (2) eine Blinkerleuchte eines Zugfahrzeugs und die zweite Leuchte (3) eine Blinkerleuchte eines Anhängers ist.
